# EUROPEAN PATENT APPLICATION

(11) **EP 1 240 829 A2**
(43) Date of publication of application: **18.09.2002**
(21) Application number: 02005305.4
(22) Date of filing: 12.03.2002
(51) Int. Cl.: A23L 1/09, A23L 1/105, A23G 3/00

(54) **Method for making fermented starch syrup from germinated brown rice and the product thereof**

(30) Priority: 13.03.2001 JP 2001117473
(71) Applicant: Kanehiro, Taketo, Hikari Seika Kabushiki Kaisha, Hikari-shi, Yamaguchi-ken (JP); Kitamura, Toshimitsu, Hikari Seika Kabushiki Kaisha, Hikari-shi, Yamaguchi-ken (JP); Oyama, Cho, Kumage-gun, Yamaguchi-ken (JP)
(72) Inventor: Kanehiro, Taketo, Hikari Seika Kabushiki Kaisha, Hikari-shi, Yamaguchi-ken (JP); Kitamura, Toshimitsu, Hikari Seika Kabushiki Kaisha, Hikari-shi, Yamaguchi-ken (JP); Oyama, Cho, Kumage-gun, Yamaguchi-ken (JP)
(74) Representative: VOSSIUS & PARTNER

(57) **Abstract**

The present invention offers candies utilizing various useful constituents of germinated brown rice and discloses the method of candy-making by fermentation that retains flavors of various raw materials.
In order to achieve the above-mentioned purposes, the invention is characterized by turning germinated brown rice into koji, adding several enzymes thereto in order to achieve liquefaction in the primary fermentation stage, and then maturing the resultant solution in the secondary fermentation stage.

## Description

The present invention concerns the method of making candies utilizing medicinal constituents of germinated brown rice, and offers a novel method of making candies while taking advantage of raw materials by innovating the conventional method of making starch syrup.

The prior art methods of making candies consist, in sum, of saccharifying and fermenting carbohydrate (such as starch) of the raw material such as rice, wheat, etc. with enzymes but without taking advantages of useful constituents of the raw materials. They were simply discarded. And yet, the substances that characterize candies such as vitamins, amino acid, flavorings, softeners, etc. were added after manufacture of candies.

It is therefore an object of the present invention to provide a composition and a method for making candies which utilize the useful ingredients of the raw material.

The present invention not only offers for the first time the art of candy-making from germinated brown rice as a raw material but also the art of candy-making by fermentation by taking advantage of other useful ingredients.

Germinated brown rice contains large quantities of useful and medicinal constituents including essential amino acids such as lysine, minerals, γ-aminobutyric acid, and proplyl endopeptidase (PEP), and their efficacy for prevention and treatment of hypertension, improvement of physical discomforts and alleviation of Alzheimer's disease is expected. Conventional methods of candy-making used only saccharified starches, and discarded other useful ingredients mentioned above.

Therefore, two problems must be solved by the present invention in using germinated brown rice; one is to condition rice in such a way that an efficient succharification is achieved as in the case of rice or wheat in the prior art, and the other is not to destroy other effective constituents of the raw material throughout the entire manufacturing steps.

As a means to solve the above-mentioned problems, the following two novel features were contrived. One is to inoculate *koji* aspergillus to germinated brown rice for moulding and then add enzymes for complete liquefaction of the object (the primary fermentation) and the second is to mature this liquid for an extended period of time by adding baker's yeast, etc. (the secondary fermentation).

Different from white rice or polished wheat generally used for candy-making, germinated brown rice have hard outer skins containing lipids as well as large amounts of effective medicinal constituents in the husks. It is impossible to decompose them by prior art fermentation using only starch succharifying enzyme. Germinated brown rice itself is moulded into *koji*, and added with enzymes that decompose saccharides, protein and lipids in order to liquefy the raw material completely.

When baker' s yeast is added to the above mentioned liquid, and the resultant mixture is fermented for an extended period of time, starch and other carbohydrate contained in germinated brown rice become sugars, protein becomes amino acid, and lipids become fatty acid and esters, to create candies having unprecedented delicious overall flavor that was not available in the prior art.

The present invention has the composition as recited in the claims:
(1) Koji is made from germinated brown rice by the prior art method. In making *koji*, an excellent result is achieved by separately steam-cooking and mixing white rice or polished wheat. Since *koji* aspergillus oryzae proliferates in white rice or polished wheat and then in brown rice covered by offal, the resulting *koji* is most delicious and beautiful-looking.
(2) The above-mentioned *koji* is added with water (addition of maltose at this stage promotes fermentation), the resulting mixture is stirred well and added with various enzymes such as carbohydrate-decomposing-enzymes (e.g. various amylases and cellulase), protein-decomposing- enzymes (e.g. proteases such as pepsin, proteinase and peptidase), and lipid-decomposing-enzymes (e.g. lipase). As enzymes are specific, a better result is obtained if as many types as possible are used. When the resultant mixture is fermented for 15 to 50 hours while maintaining the same at 55 °C and pH5∼8, the mixture becomes completely liquefied (the primary fermentation).
(3) The completely liquefied mixture is then added with baker's yeast and other enzymes to meet various needs, and fermented for 2 to 5 days while maintaining the same at 40 ∼50 °C and pH5∼8 and gently stirring (the secondary fermentation). This solution is heated at 40∼80 °C under reduced pressure in a vacuum pan, etc. and concentrated.

During the secondary fermentation, fruits such as grapes, oranges or pineapples, vegetables such as Chinese cabbages, cabbages or Japanese leeks, seafood such as kelp or fishes, or flavorings such as brown sugar are added to achieve distinctive flavored products.

### Examples

### Example 1

(1) After cooling 20.2 kg of germinated brown rice and steam-cooked 20.0 kg each of white rice and polished wheat, they are mixed, inoculated with 4.0 kg of *koji* aspergillus oryzae, and processed according to the usual method to obtain 54.0 kg of *koji* mixture.
(2) The above-mentioned *koji* is pulverized and added with 54.0 kg of water, 5.4 kg of maltose, and 0.023 kg of enzymes (mixture of amylase, protease, lipase, etc). The resultant mixture is fermented for 24 hours at 55 °C for primary fermentation. The raw materials were confirmed to have been substantially liquefied.
(3) To the tank maintained at 40-50 °C were added 11.3 kg of maltose, 0.113 kg of baker's yeast, and 0.023 kg of an enzyme mixture (amylase, protease, lipase, etc.) while stirring gently and the resultant mixture was fermented for 2 days.
(4) The above mentioned fermented solution was introduced into a vacuum pan, heated to 70 °C under the reduced pressure of 600 mmHg, and concentrated until the solid content became 75% to obtain 74.9 kg of the product.

### Example 2

The product was made by the method identical to that of Example 1 except that 87.4 kg of grapes were crushed and mixed in the secondary fermentation stage. An excellent product with fine grape flavor was obtained.

### Example 3

The product was made by the method identical to that- of Example 2 except that a mixture of 99.8 kg of grapes. 99.8 kg of oranges and 99.8 kg of pineapples was added in the secondary fermentation stage. Excellent products with fine flavors were obtained.

### Example 4

A sensory test was performed on the products of the above examples 1 to 3. A panel of six men (aged 40 to 60) and six women (aged 25 to 50) evaluated and compared the odor, body, flavor, aftertaste and overall value. As shown in Table 1 the present invention products won high scores.

**Table 1**

| Fermented starch syrup | | | | | | | | | | | |
|---|---|---|---|---|---|---|---|---|---|---|---|
| Item | | Odor | | Body | | Flavor | | Aftertaste | | Overall value | |
| Item | Comparison | M | F | M | F | M | F | M | F | M | F |
| Conventional product | Good | 1 | 2 | 0 | 2 | 1 | 1 | 2 | 1 | 1.0 | 1.5 |
| | Poor | 5 | 4 | 6 | 4 | 5 | 5 | 4 | 5 | 5.0 | 4.5 |
| Present invention product | Good | 5 | 5 | 4 | 4 | 5 | 4 | 4 | 5 | 4.5 | 4.5 |
| | Poor | 1 | 1 | 2 | 2 | 1 | 2 | 2 | 1 | 1.5 | 1.5 |

| Candy made from fermented starch syrup of germinated brown rice, grape, orange and pineapple | | | | | | | | | | | |
|---|---|---|---|---|---|---|---|---|---|---|---|
| Item | | Fragrance | | Body | | Taste | | After-taste | | Overall value | |
| Item | Comparison | M | F | M | F | M | F | M | F | M | F |
| Conventional product | Good | 2 | 3 | 0 | 1 | 1 | 1 | 4 | 3 | 1.8 | 2 |
| | Poor | 4 | 3 | 6 | 5 | 5 | 5 | 2 | 3 | 4.2 | 4 |
| Present invention product | Good | 4 | 4 | 5 | 4 | 5 | 5 | 5 | 4 | 4.5 | 4.5 |
| | Poor | 2 | 2 | 1 | 2 | 1 | 1 | 1 | 2 | 1.5 | 1.5 |

The present invention not only enabled creating novel candies by taking advantage of medicinal constituents of germinated brown rice for the first time, but also offers an excellent art of candy-making by fermentation using useful contents of all kinds of materials such as fruits, vegetables, seafood, etc.

## Claims

1. A method of making fermented starch syrup from germinated brown rice comprising the following steps;
(1) to steam-cooked germinated brown rice is optionally added steam-cooked white rice and/or polished wheat, the mixture is cooled, and then inoculated with *Koji aspergillus* oryzae to make *koji*;
(2) boiled and cooled water is added to *koji* obtained in (1) above, to the resultant mixture is optionally added starch syrup (maltose), the mixture is stirred, enzymes are added, and the mixture is fermented until it becomes liquefied (hereinafter referred to as "the primary fermentation");
(3) to the primary fermentation liquid is added baker's yeast, the mixture matured (hereinafter referred to as "the secondary fermentation"), and then concentrated at a low temperature.

2. The starch syrup obtainable by the method as claimed in Claim 1.

3. Starch syrup as claimed in Claim 2 to which fruit, vegetable, brown sugar or kelp-laminaria is added during the secondary fermentation as described in Claim 1.

4. Use of the starch syrup of Claim 2 or 3 for the preparation of candies.
